# EUROPÄISCHE PATENTSCHRIFT

(11) **EP 3 258 121 B1**
(45) Veröffentlichungstag und Bekanntmachung des Hinweises auf die Patenterteilung: **30.10.2019**
(21) Anmeldenummer: 17174739.7
(22) Anmeldetag: 07.06.2017
(51) Int. Cl.: F16B 12/24, F16B 21/08

(54) **BEFESTIGUNGSVORRICHTUNG ZUR BEFESTIGUNG ZWEIER BAUTEILE, INSBESONDERE MÖBELTEILE ODER MÖBELTEILKOMPONENTEN, ANEINANDER**
FASTENING DEVICE FOR FASTENING TWO ELEMENTS, IN PARTICULAR FURNITURE PARTS OR COMPONENTS OF FURNITURE PARTS, TO EACH OTHER
DISPOSITIF D'ASSEMBLAGE DE DEUX ÉLÉMENTS STRUCTURAUX, EN PARTICULIER DE PARTIES DE MEUBLES OU D'ÉLÉMENTS STRUCTURAUX DE MEUBLES

(30) Priorität: 15.06.2016 DE 202016003748 U
(43) Veröffentlichungstag der Anmeldung: 20.12.2017
(73) Patentinhaber: Grass GmbH, 6973 Höchst (AT)
(72) Erfinder: Mittwoch, Stefan, 6850 Dornbirn (AT)
(74) Vertreter: Patentanwälte Magenbauer & Kollegen Partnerschaft mbB

(56) Entgegenhaltungen:
- DE-A1- 2 919 769
- DE-U1- 29 513 721
- FR-A1- 2 257 809
- GB-A- 2 301 618
- US-A- 4 353 663

## Beschreibung

Die Erfindung betrifft eine Befestigungsvorrichtung zur Befestigung zweier Bauteile, insbesondere Möbelteile oder Möbelteilkomponenten, aneinander, mit wenigstens einem in einem Befestigungsloch des zugeordneten Bauteils festlegbaren Dübel.

Um zwei Bauteile, insbesondere Möbelteile oder Möbelteilkomponenten, lösbar miteinander zu verbinden, gibt es verschiedene Möglichkeiten. Im Holzbau und/oder Möbelbau sind dazu Verbindungen mittels Spreizdübel bekannt. Dabei wird im ersten Bauteil der Spreizdübel mit einem Verbindungselement in eine vorhandene Bohrung eingesetzt und im anderen Bauteil ist das Gegenstück vorgesehen, das zum Beispiel aus einem Exzenterbauteil bestehen kann. Mit dem Exzenterbauteil kann man über das Verbindungselement die beiden Bauteile möglichst ohne Spiel miteinander verbinden.

Derartige Befestigungsvorrichtungen mit Dübel und Verbindungselement finden in der Möbelindustrie, beispielsweise bei Möbelverbindern, aber auch bei der Befestigung von Montageplatten für Scharniere oder dergleichen vielfältigen Verwendung. Aus der AT 348 183 B und der AT 352 333 B sind Befestigungsvorrichtungen bekannt geworden, bei denen ein Spreizdübel in ein Sackloch einer Möbelseitenwand eingesteckt wird, sodass an diesem eine Montageplatte befestigt werden kann.

Die DE 198 30 740 A1 offenbart eine Relingbefestigung für Schubladen, bei der ein Spreizdübel in eine Befestigungsbohrung einer Frontblende eingedreht wird, wobei im Dübel ein diesen axial überlagerndes Kopfteil verankert werden kann. Für die Verankerung weist das Kopfteil ein Spreizkopf auf, der hakenartig in den Dübel eingeschoben wird und bei einem Verschwenken den Dübel aufspreizt.

Die DE 29 19 769 A1 und die US 4,353,663B offenbaren auch Befestigungsvorrichtung zur Befestigung zweier Möbelteile aneinander.

Aufgabe der Erfindung ist es, eine Befestigungsvorrichtung der eingangs erwähnten Art zu schaffen, die in der Lage ist bei der Befestigung zweier Möbelteile oder Möbelteilkomponente aneinander ein hohes Toleranzspektrum aufzunehmen beziehungsweise viel Spiel ausgleichen zu können. Ferner soll die Befestigungsvorrichtung möglichst einfach montierbar sein.

Diese Aufgabe wird durch eine Befestigungsvorrichtung zur Befestigung zweier Bauteile, insbesondere Möbelteile oder Möbelteilkomponenten, aneinander, mit den Merkmalen des unabhängigen Anspruchs 1 gelöst. Weiterbildungen der Erfindung sind in den Unteransprüchen dargestellt.

Die erfindungsgemäße Befestigungsvorrichtung zur Befestigung zweier Bauteile, insbesondere Möbelteile oder Möbelteilkomponente, aneinander, besitzt wenigstens ein in einem Befestigungsloch des zugeordneten Bauteils festlegbaren Dübel, der einen mit einer Längsachse ausgestatteten zylindrischen Grundkörper aufweist und mehrere Lamellen besitzt, die axial zur Längsachse hintereinander mit Abstand zueinander aufgereiht am Grundkörper angeordnet sind, wobei sich die Lamellen jeweils radial zur Längsachse über eine Mantelfläche des Grundkörpers hinaus erstrecken, und wobei die Lamellen aus eigensteifem, biegbarem Material bestehen, derart, dass sich die Lamellen beim Einführen in das zugeordnete Befestigungsloch in Einführrichtung durchbiegen, sodass sie sich bei einer Bewegung entgegen der Einführrichtung in der Wandung des zugeordneten Befestigungslochs verkrallen.

Die Erfindung betrifft also keinen Spreizdübel, sondern einen Dübel mit mehreren Lamellen, der auch als Lamellendübel bezeichnet werden könnte. Durch das eigensteife und trotzdem biegbare Material der Lamellen ist es möglich, den Dübel insbesondere von Hand in das zugeordnete Befestigungsloch einzuführen. Dabei werden die einzelnen Lamellen in Einführrichtung umgebogen, falls der Querschnitt, insbesondere der Durchmesser der Lamellen größer ist als der Querschnitt, insbesondere Durchmesser, des Befestigungslochs. Beim Ausziehen des Dübels aus dem Befestigungsloch sollen die Lamellen in die entgegengesetzte Richtung (Bewegungsrichtung nach außen) umgebogen werden. Dabei verkrallen sich die Lamellen jedoch in der Wandung des zugeordneten Befestigungslochs, was eine Durchbiegung in die andere Richtung, also entgegen der Einführrichtung, verhindert. Somit ist der Dübel fest im Befestigungsloch verankert. Zur Montage des Dübels wird kein Werkzeug benötigt. Der Dübel lässt sich von Hand in das Befestigungsloch einpressen. Die Montage lässt sich daher schnell und einfach durchführen. Durch die starke Biegbarkeit der Lamellen kann der Dübel in Befestigungslöcher mit einer großen Toleranzbreite eingesetzt werden.

Bei einer Weiterbildung der Erfindung sind die Lamellen scheibenförmig, insbesondere als Kreisscheiben, ausgebildet. Eine derartige Form ist sicherlich die gängigste aller Geometrien, da die Befestigungslöcher in der Regel als zylindrische Bohrlöcher ausgebildet sind. Es wäre jedoch auch denkbar, andere Lamellengeometrien einzusetzen. Beispielsweise wäre ein rechteckiger oder quadratischer Querschnitt der Lamellen denkbar, der an ein Befestigungsloch mit rechteckigem oder quadratischem Querschnitt, beispielsweise als Stanzloch hergestellt, angepasst ist.

In besonders bevorzugter Weise sind die Lamellen einstückig an den Grundkörper angeformt. Es ist jedoch auch möglich, dass der Dübel ein mehrteiliges Bauteil ist, und der Grundkörper und die Lamellen voneinander verschiedene Bauteile sind.

In besonders bevorzugter Weise besteht der Dübel aus Kunststoffmaterial und ist bevorzugt durch Kunststoffspritzgießen herzustellen. Dies ist insbesondere aus Kostengründen effizient. Es ist jedoch auch möglich, dass der Dübel aus einem anderen Material als Kunststoff besteht, beispielsweise Metallmaterial. Es wäre beispielsweise denkbar, den Dübel als Metalldübel auszubilden, wobei die Lamellen aus Metallblech bestehen.

Bei einer Weiterbildung der Erfindung weist der zylindrische Grundkörper zwei einander entgegengesetzt angeordnete Endabschnitte auf, von denen ein vorderer Endabschnitt im Gebrauchszustand im zugeordneten Befestigungsloch aufgenommen ist und ein hinterer Endabschnitt eine Befestigungsschnittstelle aufweist, an der ein zugeordnetes weiteren Bauteil befestigbar oder befestigt ist. Bei dem weiteren Bauteil handelt es sich vorzugsweise um eine Möbelteilkomponente oder um eine möbelteilbezogene Zusatzkomponente. Beispielsweise wäre es möglich, als weiteres Bauteil eine Synchronisationsstange einzusetzen, die für einen Gleichlauf von rechter und linker Führungseinheit zur Führung eines bewegbaren Möbelteils in Form einer Schublade sorgt.

Bei einer Weiterbildung der Erfindung ist der vordere Endabschnitt von einer Lamelle gebildet.

Es ist möglich, dass die Befestigungsschnittstelle am hinteren Endabschnitt ein Halterungsglied zur Halterung des zugeordneten weiteren Bauteils aufweist. Zweckmäßigerweise ist das Halterungsglied derart ausgebildet, dass ein werkzeugloses Anbringen des zu halternden weiteren Bauteils möglich ist. Beispielsweise könnte eine Synchronisationstange werkzeuglos am Halterungsglied angebracht werden.

Besonders bevorzugt ist das Halterungsglied als Halterungsclip ausgebildet.

Bei einer Weiterbildung der Erfindung weist der zylindrische Grundkörper einen Anschlagabschnitt auf, der gegenüber den Lamellen einen größeren Querschnitt aufweist und im Gebrauchszustand zur Begrenzung der Einführtiefe an einen das Befestigungsloch umgebenen Wandabschnitt anschlägt.

Zweckmäßigerweise ist der Anschlagabschnitt scheibenförmig ausgebildet. Selbstverständlich sind auch andere Anschlagscheiben-Geometrien denkbar.

Bei einer Weiterbildung der Erfindung ist ein Basisabschnitt vorgesehen, an dem mehrere Dübel, insbesondere mit voneinander verschieden ausgerichteten Längsachsen angeordnet sind. Eine solche Befestigungsvorrichtung kann beispielsweise als Frontbodenverbinder ausgebildet sein, der einerseits mit dem Boden eines als Schublade ausgebildeten bewegbaren Möbelteils und andererseits mit der Front jeweils über die Lamellendübel verbunden ist.

Die Erfindung umfasst ferner ein Möbel, mit einer ersten und einer zweiten Möbelkomponente, die über eine Befestigungsvorrichtung aneinander befestigt sind, wobei die Befestigungsvorrichtung nach einem der Ansprüche 1 bis 12 ausgebildet ist.

In besonders bevorzugter Weise ist an einer der beiden Möbelkomponenten wenigstens ein Befestigungsloch ausgebildet, dessen Querschnitt, insbesondere Durchmesser kleiner ist als der Querschnitt, insbesondere Durchmesser der Lamellen. Dadurch werden die Lamellen beim Einpressen des Dübels in Einführrichtung durchgebogen, sodass es sich bei einer Bewegung entgegen der Einfahrrichtung in der Wandung des zugeordneten Befestigungslochs verkrallen.

Bevorzugte Ausführungsbeispiele der Erfindung sind in der Zeichnung dargestellt und werden im Folgenden näher erläutert. In der Zeichnung zeigen:
- Figur 1: eine schematische Darstellung eines ersten Ausführungsbeispiels der erfindungsgemäßen Befestigungsvorrichtung im eingebauten Gebrauchszustand,
- Figur 2: eine perspektivische Ansicht der Befestigungsvorrichtung von Figur 1,
- Figur 3: eine Seitenansicht der Befestigungsvorrichtung von Figur 2,
- Figur 4: ein zweiten nicht erfindungsgemäßen Ausführungsbeispiel der Befestigungsvorrichtung im eingebauten Zustand, wobei der Dübel sich im zugeordneten Befestigungsloch befindet,
- Figur 5: eine perspektivische Darstellung der Befestigungsvorrichtung von Figur 4,
- Figur 6: eine Seitenansicht der Befestigungsvorrichtung von Figur 5,
- Figur 7: eine perspektivische Darstellung eines dritten nicht erfindungsgemäßen Ausführungsbeispiels der Befestigungsvorrichtung und
- Figur 8: eine Seitenansicht der Befestigungsvorrichtung von Figur 7.

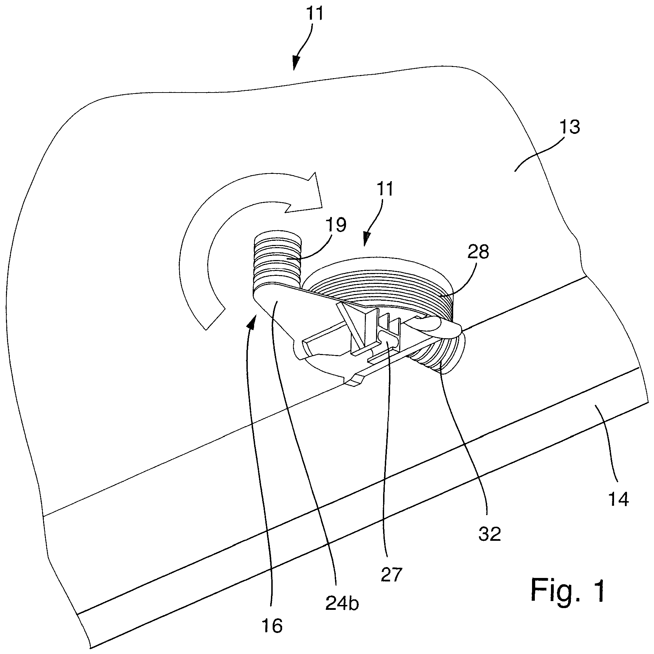

Die Figuren 1 bis 3 zeigen ein ersten erfindungsgemäßen Ausführungsbeispiel der erfindungsgemäßen Befestigungsvorrichtung 11 zur Befestigung zweier Bauteile, insbesondere Möbelteile oder Möbelteilkomponenten, aneinander. Die Erfindung wird im Folgenden beispielhaft anhand eines als Schublade ausgebildeten Möbelteils 12 erläutert. Gemäß erstem erfindungsgemäßen Ausführungsbeispiel werden zwei Möbelteilkomponenten der Schublade aneinander befestigt, beispielhaft gezeigt bei der Befestigung des Schubladenbodens 13 an der Front 14. Selbstverständlich ist es auch möglich, ganz andere Möbelteilkomponenten aneinander zu befestigen und auch im Beispielsfall Schublade lassen sich andere Komponenten als die in Figur 1 gezeigten mittels der Befestigungsvorrichtung 11 aneinander befestigen.

Die Befestigungsvorrichtung 11 umfasst wenigstens ein in einem Befestigungsloch 15 der betreffenden Möbelteilkomponente, beispielsweise Schubladenboden 13, festlegbaren Dübel 16.

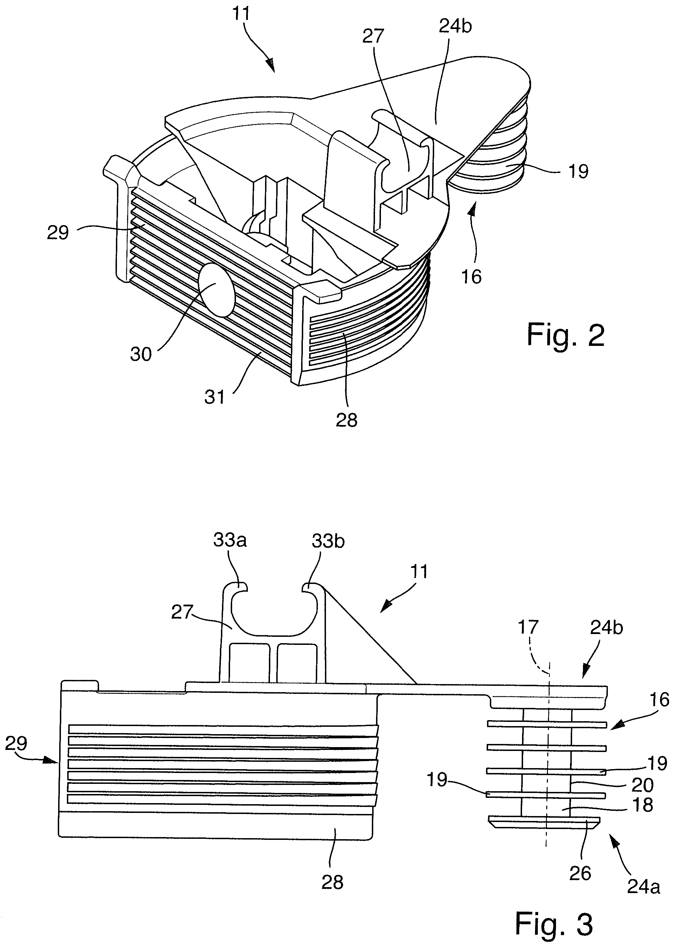

Wie insbesondere in Figur 3 gezeigt, besitzt der Dübel 16 einen mit einer Längsachse 17 ausgestatteten zylindrischen Grundkörper 18 und mehrere Lamellen 19. Die Lamellen 19 sind axial zur Längsachse 17 hintereinander mit Abstand zueinander aufgereiht am Grundkörper 18 angeordnet.

Im gezeigten Beispielsfall ist der Dübel 16 ein einteiliges Kunststoffbauteil und wird vorzugsweise mittels Kunststoffspritzgießen hergestellt. Dabei sind Grundkörper 18 und Lamellen 19 einstückig miteinander verbunden. Die Lamellen 19 ragen jeweils radial zur Längsachse 17 über eine Mantelfläche 20 des Grundkörpers 18 hinaus.

Die Lamellen 19 bestehen aus eigensteifem, biegbarem Material, also im Beispielsfall biegbarem Kunststoffmaterial.

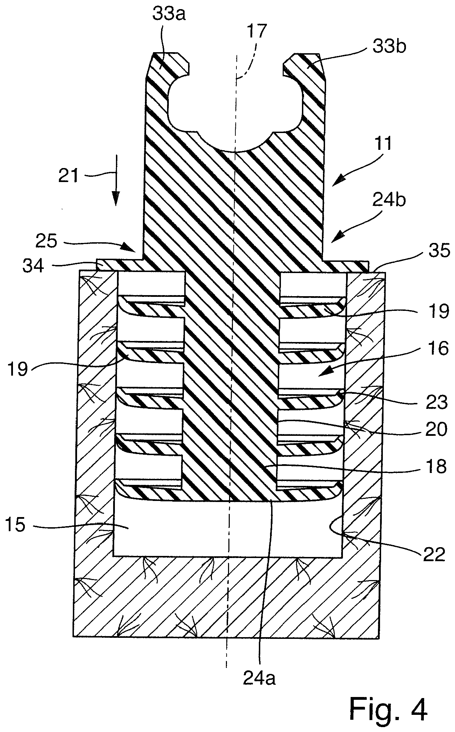

Wie insbesondere in Figur 4 anhand des zweiten nicht erfindungsgemäßen Ausführungsbeispiels gezeigt, das vom Funktionsprinzip der Montage des Dübels 16 dem ersten erfindungsgemäßen entspricht, ist das im Schubladenboden 13 ausgebildete Befestigungsloch 15, bei dem es sich zweckmäßigerweise um ein Bohrloch handelt, im Durchmesser kleiner als der Durchmesser der Lamellen 19. Dies führt dazu, dass sich die Lamellen 19 beim Einpressen des Dübels in das Befestigungsloch 15 in Einführrichtung 21 durchbiegen, damit sie in das Befestigungsloch 15 passen. Dies führt dazu, dass sie sich bei einer Bewegung entgegen der Einführrichtung 21 in der Wandung 22 des Befestigungslochs verkrallen. Besteht die Möbelteilkomponente, also gemäß erstem erfindungsgemäßen Ausführungsbeispiel der Schubladenboden 13, aus Holzmaterial so schneiden sich die Außenkanten 23 der Lamellen bei einer Bewegung entgegen der Einführrichtung 21 in das Material ein. Dies sorgt für eine zuverlässige Verankerung des Dübels im Befestigungsloch 15. Aber auch bei anderen Materialien der Möbelteilkomponente, beispielsweise einem Schubladenboden aus Kunststoffmaterial, verkrallen sich die Außenkanten 23 der Lamellen 19 in der Wandung 22 des zugeordneten Befestigungslochs 15.

Wie insbesondere in Figur 3 gezeigt, besitzt der zylindrische Grundkörper 18 zwei aneinander entgegengesetzt angeordnete Endabschnitte 24a, 24b, von denen ein vorderer Endabschnitt 24a im Gebrauchszustand im zugeordneten Befestigungsloch 15 aufgenommen ist und ein hinterer Endabschnitt 24b eine Befestigungsschnittstelle 25 aufweist, an der ein zugeordnetes weiteres Bauteil (nicht dargestellt) befestigbar oder befestigt ist.

Im gezeigten Beispielsfall ist der vordere Endabschnitt 24a von einer Lamelle 19 gebildet, die sich gegebenenfalls zum stirnseitigen Ende des Dübels 16 hin konisch verjüngt, damit das Einführen in das zugeordnete Befestigungsloch 15 erleichtert ist. Der Konus 26 an der vorderen Lamelle 19 ist jedoch nicht notwendig, so kann bei einer anderen Variante die vordere, den Endabschnitt 24a bildende Lamelle 19 von der Dimension und der Ausgestaltung gleich wie die anderen Lamellen ausgebildet sein.

Wie weiter in Figur 3 und auch in Figur 2 gezeigt, besitzt der hintere Endabschnitt, der nicht in das zugeordnete Befestigungsloch 15 eintaucht, ein Halterungsglied 27 zum werkzeuglosen Anbringen eines zu halternden weiteren Bauteils.

Erfindungsgemäß besitzt der hintere Endabschnitt 24b eine beispielsweise dreiecksförmig ausgebildete Lasche, die sich vom Dübel 16 zu einem Basisabschnitt 28 hin erstreckt. Im gezeigten Beispielsfall des ersten erfindungsgemäßen Ausführungsbeispiels ist der Dübel 16 Bestandteil eines Frontbodenverbinders, der neben dem Basisabschnitt 28 den erwähnten Dübel 16 als seitlichen Ausleger besitzt.

Wie insbesondere in Figur 2 dargestellt, hat der Basisabschnitt 28 die Form eines Zylinders mit einer Abflachung 29, die an der dem Dübel 16 entgegengesetzten Seite des Basisabschnitts 18 ausgebildet ist. In der Abflachung 29 befindet sich in etwa mittig ein Montageloch 30 zur Aufnahme eines Steckzapfens 32, wie nachfolgend noch näher erläutert.

An der Abflachung 29 befindet sich ferner einer Riffelung 31, die im montierten Gebrauchszustand des Frontbodenverbinders an der Innenseite der Front in Anlage liegt.

Wie insbesondere in Figur 1 gezeigt, ist am Schubladenboden 13, der beispielsweise aus Holz besteht, eine der Form des Basisabschnitts 28 entsprechende Aussparung vorgesehen, in der der Basisabschnitt 28 des Frontbodenverbinders aufgenommen ist. Zusätzlich ist am Schubladenboden 13 ein Befestigungsloch 15 in Form einer Bohrung eingebracht, in das der Dübel 16, der am Ausleger des Basisabschnitts 28 sitzt, eingepresst ist. Ferner befindet sich an der Innenseite der Front ebenfalls eine Bohrung zur Aufnahme eines Steckzapfens 32, der einerseits in der Bohrung an der Front 14 und andererseits im Montageloch 30 des Frontbodenverbinders aufgenommen ist. Im gezeigten Beispielsfall sorgt der Dübel 16 für eine Verdrehsicherung des Frontbodenverbinders in seiner Aufnahme, sodass der Schubladenboden passgenau an der Front 15 sitzt und die Front nicht durch Verdrehung des Basisabschnittes in seiner Aussparung ein Stück weit gegenüber dem Schubladenboden verdreht werden kann.

Die Figuren 4 bis 6 zeigen ein zweites nicht erfindungsgemäßen Ausführungsbeispiel der erfindungsgemäßen Befestigungsvorrichtung 11. Die Befestigungsvorrichtung 11 gemäß dem zweiten nicht erfindungsgemäßen Ausführungsbeispiel unterscheidet sich von dem zuvor beschriebenen ersten erfindungsgemäßen Ausführungsbeispiel dadurch, dass der Hauptbestandteil der Dübel 16 ist und es an einem Basisabschnitt mangelt. Die Befestigungsvorrichtung 11 besteht also hauptsächlich aus dem Dübel 16.

Der Dübel 16 ist in derselben Weise aufgebaut, wie der zuvor beschriebene des ersten erfindungsgemäßen Ausführungsbeispiels. Auch hier sind am zylindrischen Grundkörper mehrere axial zur Längsachse 17 hintereinander mit Abstand zueinander aufgereihte Lamellen 19 aus eigensteifem, biegbarem Material vorgesehen.

Wie insbesondere in Figur 4 gezeigt, ist der Durchmesser der Lamellen 19 größer als der Durchmesser des Befestigungslochs 15, insbesondere des Bohrlochs, sodass sich die Lamellen beim Einpressen in Einführrichtung 21 durchbiegen. Bei einer Bewegung entgegen der Einführrichtung 21 verkrallen sich die Außenkanten 23 der Lamellen in der Wandung des Befestigungslochs 15.

Wie insbesondere weiter in Figur 4 gezeigt, ist am hinteren Endabschnitt 24b eine Befestigungsschnittstelle 25 mit einem Halterungsglied 27 vorgesehen. Das Halterungsglied 27 ist in Form eines Halterungsclips ausgebildet und besitzt zwei aneinander gegenüberliegende, eine Halterungsöffnung ein Stück weit umschließende Schenkel 33a, 33b, die elastisch biegbar sind, sodass ein weiteres Bauteil, insbesondere eine Synchronisationsstange (nicht dargestellt) werkzeuglos eingeclipst und dort gehaltert werden kann.

Am hinteren Endabschnitt 24b ist ferner ein kreisscheibenförmiger Anschlagabschnitt 34 vorgesehen, dessen Durchmesser größer ist als der Durchmesser der Lamellen 19 und vor allem größer ist als der Durchmesser des Befestigungslochs 15 und der somit im Gebrauchszustand zur Begrenzung der Einführtiefe an einen das Befestigungsloch 15 umgebenden Wandabschnitt 35 anschlägt.

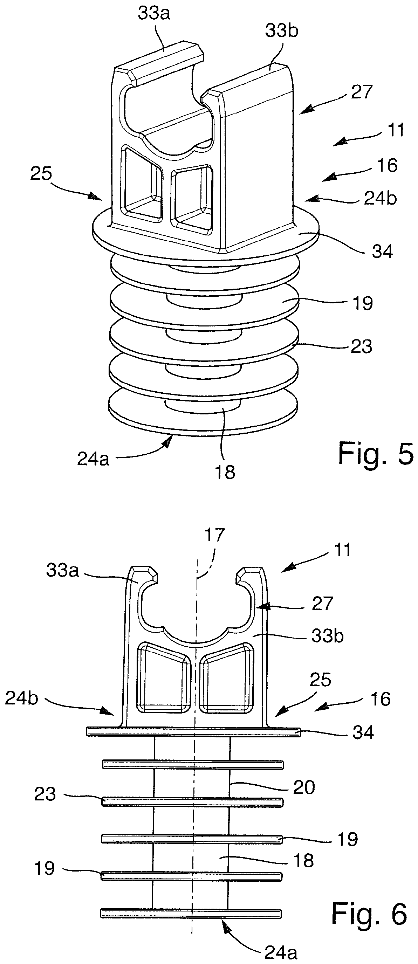

Wie insbesondere in den Figuren 5 und 6 gezeigt ist das Halterungsglied 27 gemäß dem zweiten nicht erfindungsgemäßen Ausführungsbeispiel auf diesem Anschlagabschnitt 34 aufgesetzt. Halterungsglied 27 und Anschlagabschnitt sind einstückig miteinander verbunden. Zweckmäßigerweise wird das Halterungsglied 27 bei der Herstellung des Dübels 16 gleich mit angeformt.

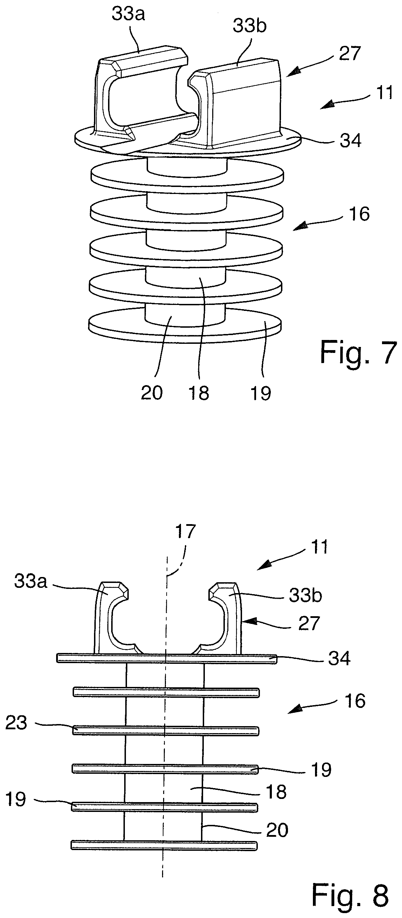

Die Figuren 7 und 8 zeigen ein drittes nicht erfindungsgemäßen Ausführungsbeispiel der Befestigungsvorrichtung 11. Das dritte nicht erfindungsgemäße Ausführungsbeispiel unterscheidet sich von dem zuvor beschriebenen zweiten nicht erfindungsgemäßen Ausführungsbeispiel lediglich durch die andersartige Ausgestaltung des Halterungsglieds 27. Im Gegensatz zum Halterungsglied 27 des zweiten nicht erfindungsgemäßen Ausführungsbeispiels sind bei dem Halterungsglied des dritten Ausführungsbeispiels die Schenkel 34a, 34b unmittelbar an den Anschlagabschnitt 34 angeformt, wobei eine Halterungskontur der Halterungsöffnung teilweise in den Anschlagabschnitt 34 eingeformt ist. Zweckmäßigerweise ist ein derartiges Halterungsglied 27 ebenfalls zur Halterung einer Synchronisationsstange geeignet.

## Patentansprüche

1. Befestigungsvorrichtung zur Befestigung zweier Bauteile, insbesondere Möbelteile (12) oder Möbelteilkomponenten, aneinander, mit wenigstens einem in einem Befestigungsloch (15) des zugeordneten Bauteils festlegbaren Dübel (16), der einen mit einer Längsachse (17) ausgestatteten insbesondere zylindrischen Grundkörper (18) aufweist und mehrere Lamellen (19) besitzt, die axial zur Längsachse (17) hintereinander mit Abstand zueinander aufgereiht am Grundkörper (18) angeordnet sind, wobei sich die Lamellen (19) jeweils radial zur Längsachse (17) über eine Mantelfläche (20) des Grundkörpers (18) hinaus erstrecken, und wobei die Lamellen (19) aus eigensteifem, biegbarem Material bestehen, derart, dass sich die Lamellen (19) beim Einführen in das zugeordnete Befestigungsloch (15) in Einführrichtung (21) durchbiegen, so dass sie sich bei einer Bewegung entgegen der Einführrichtung (21) in der Wandung (22) des zugeordneten Befestigungslochs (15) verkrallen, wobei der zylindrische Grundkörper (18) zwei einander entgegensetzt angeordnete Endabschnitte (24a, 24b) aufweist, von denen ein vorderer Endabschnitt (24a) im Gebrauchszustand im zugeordneten Befestigungsloch (15) aufgenommen ist und ein hinterer Endabschnitt (24b) eine Befestigungsschnittstelle (25) aufweist, an der ein zugeordnetes weiteres Bauteil befestigbar oder befestigt ist, wobei der hintere Endabschnitt (24b) eine Lasche besitzt, die sich vom Dübel (16) zu einem Basisabschnitt (28) hin erstreckt, wobei der Dübel (16) Bestandteil eines Frontbodenverbinders ist, der neben dem Basisabschnitt (28) den Dübel (16) als seitlichen Ausleger besitzt, wobei der Basisabschnitt (28) die Form eines Zylinders hat, mit einer Abflachung (29), die an der dem Dübel (16) entgegengesetzten Seite des Basisabschnitts (28) ausgebildet ist, wobei sich in der Abflachung (29) in etwa mittig ein Montageloch (30) zur Aufnahme eines Steckzapfens (32) befindet, **dadurch gekennzeichnet, dass** sich an der Abflachung (29) eine Riffelung (31) befindet, die im montierten Gebrauchszustand des Frontbodenverbinders an der Innenseite der Front in Anlage liegt.

2. Befestigungsvorrichtung nach Anspruch 1, **dadurch gekennzeichnet, dass** die Lamellen (19) scheibenförmig, insbesondere als Kreisscheibe ausgebildet sind.

3. Befestigungsvorrichtung nach Anspruch 1 oder 2, **dadurch gekennzeichnet, dass** die Lamellen (19) einstückig an den Grundkörper (18) angeformt sind.

4. Befestigungsvorrichtung nach einem der vorhergehenden Ansprüche, **dadurch gekennzeichnet, dass** der Dübel (16) aus Kunststoffmaterial besteht, insbesondere ein Kunststoffspritzgießteil ist.

5. Befestigungsvorrichtung nach einem der vorhergehenden Ansprüche, **dadurch gekennzeichnet, dass** der vordere Endabschnitt (24a) von einer Lamelle (19) gebildet ist.

6. Befestigungsvorrichtung nach einem der vorhergehenden Ansprüche, **dadurch gekennzeichnet, dass** die Befestigungsschnittstelle (25) am hinteren Endabschnitt (24b) ein Halterungsglied (27) zur Halterung des zugeordneten weiteren Bauteils aufweist.

7. Befestigungsvorrichtung nach Anspruch 6, **dadurch gekennzeichnet, dass** das Halterungsglied (27) derart ausgebildet ist, dass ein werkzeugloses Anbringen des zu halternden weiteren Bauteils möglich ist.

8. Befestigungsvorrichtung nach Anspruch 7, **dadurch gekennzeichnet, dass** das Halterungsglied (27) als Halterungsclip ausgebildet ist.

9. Befestigungsvorrichtung nach einem der vorhergehenden Ansprüche, **dadurch gekennzeichnet, dass** der zylindrische Grundkörper (18) einen Anschlagabschnitt (34) aufweist, der gegenüber den Lamellen (19) einen größeren Querschnitt aufweist und im Gebrauchszustand zur Begrenzung der Einführtiefe an einen das Befestigungsloch (15) umgebenden Wandabschnitt (35) anschlägt.

10. Befestigungsvorrichtung nach Anspruch 9, **dadurch gekennzeichnet, dass** der Anschlagabschnitt (34) scheibenförmig ausgebildet ist.

11. Befestigungsvorrichtung nach einem der vorhergehenden Ansprüche, **gekennzeichnet durch** einen Basisabschnitt (28), an dem mehrere Dübel (16), insbesondere mit von einander verschieden ausgerichteten Längsachsen (17) angeordnet sind.

12. Möbel, mit einer ersten und einer zweiten Möbelkomponente, die über eine Befestigungsvorrichtung (11) aneinander befestigt sind, **dadurch gekennzeichnet, dass** die Befestigungsvorrichtung (11) nach einem der Ansprüche 1 bis 11 ausgebildet ist.

13. Möbel nach Anspruch 12, **dadurch gekennzeichnet, dass** an einer der beiden Möbelkomponenten wenigstens ein Befestigungsloch (15)ausgebildet ist, dessen Querschnitt, insbesondere Durchmesser, kleiner ist als der Querschnitt, insbesondere Durchmesser, der Lamellen (19).

## Claims

1. Fastening device for fastening two components, in particular furniture parts (12) or furniture components, to each other, with at least one dowel (16), which can be located in a mounting hole (15) of the associated component and which has an in particular cylindrical base body (18) with a longitudinal axis (17) and several ribs (19), which are arranged on the base body (18) axially one behind the other relative to the longitudinal axis (17) and at a distance from one another, wherein the ribs (19) extend radially beyond an outer surface (20) of the base body (18) relative to the longitudinal axis (17), and wherein the ribs (19) consist of an inherently stiff bendable material in such a way that the ribs (19) bend in the insertion direction (21) when being inserted into the associated mounting hole (15), so that they lock in the wall (22) of the associated mounting hole (15) at a movement against the insertion direction (21), wherein the cylindrical base body (18) has two oppositely located end sections (24a, 24b), of which a front end section (24a) is in the state of use accommodated in the associated mounting hole (15) and a rear end section (24b) has a fastening interface (25), where an associated further component can be or is fastened, wherein the rear end section (24b) has a tab extending from the dowel (16) to a base section (28), wherein the dowel (16) is a part of a front base connector having next to the base section (28) the dowel (16) as a side arm, wherein the base section (28) has the shape of a cylinder with a flat section (29) formed at the side of the base section (28) which is opposite the dowel (16), where approximately in the centre of the flat section (29) there is provided a mounting hole (30) for the accommodation of a plug-in pin (32), **characterised in that** there is a fluting (31) at the flat section (29), which lies in contact with the inside of the front in the assembled state of use of the front base connector.

2. Fastening device according to claim 1, **characterised in that** the ribs (19) are disc-shaped, being designed as circular discs in particular.

3. Fastening device according to claim 1 or 2, **characterised in that** the ribs (19) are integrally formed in one piece with the base body (18).

4. Fastening device according to any of the preceding claims, **characterised in that** the dowel (16) is made of a plastic material, being an injection-moulded plastic part in particular.

5. Fastening device according to any of the preceding claims, **characterised in that** the front end section (24a) is represented by a rib (19).

6. Fastening device according to any of the preceding claims, **characterised in that** the fastening interface (25) has at the rear end section (24b) a holding member (27) for holding the associated further component.

7. Fastening device according to claim 6, **characterised in that** the holding member (27) is designed such that it is possible to fit the further component to be held without the use of tools.

8. Fastening device according to claim 7, **characterised in that** the holding member (27) is designed as a holding clip.

9. Fastening device according to any of the preceding claims, **characterised in that** the cylindrical base body (18) has a stop section (34), which has a larger cross-section than the ribs (19) and in the state of use hits a wall section (35) surrounding the mounting hole (15) to limit the insertion depth.

10. Fastening device according to claim 9, **characterised in that** the stop section (34) is designed to be disc-shaped.

11. Fastening device according to any of the preceding claims, **characterised by** a base section (28), in which several dowels (16), in particular with longitudinal axes 17) of different orientation, are arranged.

12. Piece of furniture with a first and a second furniture component which are secured to each other by way of a fastening device (11), **characterised in that** the fastening device (11) is designed according to any of claims 1 to 11.

13. Piece of furniture according to claim 12, **characterised in that** at least one mounting hole (15), the cross-section, in particular the diameter, of which is smaller than the cross-section, in particular the diameter, of the ribs (19), is formed at one of the two furniture components.

## Revendications

1. Dispositif de fixation servant à fixer deux composants, en particulier des parties de meuble (12) ou des composants de partie de meuble, l'un à l'autre, avec au moins une cheville (16), pouvant être bloquée dans un trou de fixation (15) du composant associé, qui présente un corps de base (18) en particulier cylindrique doté d'un axe longitudinal (17) et possède plusieurs lamelles (19), qui sont disposées de manière axiale par rapport à l'axe longitudinal (17) les unes derrière les autres de manière alignée à distance les unes par rapport aux autres au niveau du corps de base (18), dans lequel les lamelles (19) s'étendent respectivement de manière radiale par rapport à l'axe longitudinal (17) au-delà d'une surface enveloppante (20) du corps de base (18), et dans lequel les lamelles (19) sont constituées d'un matériau flexible, intrinsèquement rigide, de telle manière que les lamelles (19) fléchissent lors de l'introduction dans le trou de fixation (15) associé dans la direction d'introduction (21) de sorte qu'elles s'accrochent lors d'un déplacement dans le sens opposé à la direction d'introduction (21) dans la paroi (22) du trou de fixation (15) associé, dans lequel le corps de base (18) cylindrique présente deux sections d'extrémité (24a, 24b) disposées de manière opposée l'une à l'autre, dont une section d'extrémité avant (24a) est reçue dans l'état d'utilisation dans le trou de fixation (15) associé et une section d'extrémité arrière (24b) présente une interface de fixation (25), au niveau de laquelle un autre composant associé peut être fixé ou est fixé, dans lequel la section d'extrémité arrière (24b) possède une bride, qui s'étend depuis la cheville (16) vers une section de base (28), dans lequel la cheville (16) fait partie intégrante d'un connecteur de fond avant, qui possède, outre la section de base (28), la cheville (16) en tant que bras latéral, dans lequel la section de base (28) a la forme d'un cylindre, avec un aplatissement (29), qui est réalisé au niveau du côté de la section de base (28) opposé à la cheville (16), dans lequel un trou de montage (30) servant à recevoir un tourillon d'enfichage (32) se trouve dans l'aplatissement (29) à peu près au centre, **caractérisé en ce que** se trouve au niveau de l'aplatissement (29) une cannelure (31), qui s'appuie, dans l'état d'utilisation monté du connecteur de fond avant, au niveau du côté intérieur de l'avant.

2. Dispositif de fixation selon la revendication 1, **caractérisée en ce que** les lamelles (19) sont réalisées en forme de disque, en particulier en tant que disque circulaire.

3. Dispositif de fixation selon la revendication 1 ou 2, **caractérisé en ce que** les lamelles (19) sont formées d'un seul tenant au niveau du corps de base (18).

4. Dispositif de fixation selon l'une quelconque des revendications précédentes, **caractérisé en ce que** la cheville (16) est constituée de matière plastique, en particulier d'une pièce moulée par injection en matière plastique.

5. Dispositif de fixation selon l'une quelconque des revendications précédentes, **caractérisé en ce que** la section d'extrémité avant (24a) est formée par une lamelle (19).

6. Dispositif de fixation selon l'une quelconque des revendications précédentes, **caractérisé en ce que** l'interface de fixation (25) présente au niveau de la section d'extrémité arrière (24b) un organe de maintien (27) servant à maintenir l'autre composant associé.

7. Dispositif de fixation selon la revendication 6, **caractérisé en ce que** l'organe de maintien (27) est réalisé de telle manière qu'une installation sans outil de l'autre composant à maintenir est possible.

8. Dispositif de fixation selon la revendication 7, **caractérisé en ce que** l'organe de maintien (27) est réalisé en tant que clip de maintien.

9. Dispositif de fixation selon l'une quelconque des revendications précédentes, **caractérisé en ce que** le corps de base (18) cylindrique présente une section de butée (34), qui présente une section transversale plus grande par rapport aux lamelles (19) et vient buter, dans l'état d'utilisation, pour délimiter la profondeur d'introduction, au niveau d'une section de paroi (35) entourant le trou de fixation (15).

10. Dispositif de fixation selon la revendication 9, **caractérisé en ce que** la section de butée (34) est réalisée en forme de disque.

11. Dispositif de fixation selon l'une quelconque des revendications précédentes, **caractérisé par** une section de base (28), au niveau de laquelle plusieurs chevilles (16), en particulier avec des axes longitudinaux (17) orientés différemment les uns par rapport aux autres, sont disposées.

12. Meuble avec un premier et un deuxième composant de meuble, qui sont fixés l'un à l'autre par l'intermédiaire d'un dispositif de fixation (11), **caractérisé en ce que** le dispositif de fixation (11) est réalisé selon l'une quelconque des revendications 1 à 11.

13. Meuble selon la revendication 12, **caractérisé en ce qu'**est réalisé, au niveau d'un des deux composants de meuble, au moins un trou de fixation (15), dont la section transversale, en particulier le diamètre, est inférieure à la section transversale, en particulier au diamètre, des lamelles (19).
